# EUROPÄISCHE PATENTSCHRIFT

(11) **EP 3 085 559 B1**
(45) Veröffentlichungstag und Bekanntmachung des Hinweises auf die Patenterteilung: **10.01.2018**
(21) Anmeldenummer: 15003215.9
(22) Anmeldetag: 10.11.2015
(51) Int. Cl.: B60H 1/34, B60K 37/06, B60K 35/00, B60H 1/00

(54) **VERFAHREN UND BEDIENUNGSVORRICHTUNG ZUM BEDIENEN EINER KLIMAANLAGE EINES FAHRZEUGS**
METHOD AND CONTROL DEVICE FOR OPERATING AN AIR-CONDITIONING SYSTEM OF A VEHICLE
PROCEDE ET DISPOSITIF DE COMMANDE D'UNE CLIMATISATION D'UN VEHICULE AUTOMOBILE

(30) Priorität: 22.04.2015 DE 102015005126
(43) Veröffentlichungstag der Anmeldung: 26.10.2016
(73) Patentinhaber: AUDI AG, 85045 Ingolstadt (DE)
(72) Erfinder: Wunderlich, Matthias, 85053 Ingolstadt (DE); Wall, Christian, 85122 Hitzhofen (DE)
(74) Vertreter: Mader, Wilfried

(56) Entgegenhaltungen:
- DE-A1-102008 052 442
- DE-A1-102009 011 710
- DE-A1-102013 021 477
- DE-A1-102013 220 994

## Beschreibung

Die Erfindung betrifft ein Verfahren zum Bedienen einer Klimaanlage eines Fahrzeugs gemäß dem Oberbegriff des Patentanspruchs 1. Ferner betrifft die Erfindung eine Bedienvorrichtung zur Durchführung des erfindungsgemäßen Verfahrens.

Eine gattungsbildende Bedienungsvorrichtung für eine Klimaanlage, gemäß Oberbegriff des Anspruchs 6, eines Fahrzeugs ist aus der DE 10 2009 011 710 A1 bekannt. Die Luftausströmer dieser Klimaanlage umfassen Anzeige- und Bedienelemente, mit welchem die Ausströmrichtung der Luft und das Ausströmvolumen einstellbar sind. Die Ausströmrichtung wird mittels eines mechanischen Bedienelementes eingestellt, während für die Einstellung des Ausströmvolumens ein kapazitiver Slider in der Art eines Schiebereglers verwendet wird, welcher durch Annäherung oder Berührung und horizontaler Bewegung durch Gleiten auf einer Bedienoberfläche bedienbar ist.

Nachteilig an solchen sensorischen Oberflächen ist jedoch, dass eine genaue Einstellung eines gewünschten Luftstromes nicht möglich ist, da keine Rückmeldung über den eingestellten Wert des Luftstromes ausgegeben wird. Mit einer solchen Sensorik kann daher nur eine grobe Einstellung des Ausströmvolumens vorgenommen werden.

Aufgabe der Erfindung ist es ein Verfahren zum Bedienen einer Klimaanlage eines Fahrzeugs der eingangs genannten Art dahingehend zu verbessern, dass neben einer groben bzw. ungenauen Einstellung des Ausströmvolumens an einem Ausströmer auch eine genaue Einstellung ermöglicht wird. Ferner ist es Aufgabe der Erfindung eine Bedienvorrichtung zur Durchführung des ordnungsgemäßen Verfahrens anzugeben.

Diese Aufgabe wird gelöst durch ein Verfahren mit den Merkmalen des Patentanspruchs 1.

Ein solches Verfahren zum Bedienen einer Klimaanlage eines Fahrzeugs mit wenigstens einem ein Bedienelement aufweisenden Ausströmer, wobei das Ausströmvolumen mittels einer berührungsempfindlichen Betätigungsfläche des Bedienelementes eingestellt wird, zeichnet sich erfindungsgemäß dadurch aus, dass
- bei einer Betätigung des Bedienelementes für ein definiertes erstes Zeitintervall eine Schiebereglerfunktion zur Einstellung des Ausströmvolumens aktiviert wird,
- bei einer Betätigung des Bedienelementes für ein definiertes zweites Zeitintervall, welches kürzer als das erste Zeitintervall ist, auf einem Bordmonitordes Fahrzeugs ein Popup-Menü mit einer optischen Anzeige des numerischen Wertes des aktuellen Ausströmvolumens, zur Einstellung des Ausströmvolumens eingeblendet wird, und
- mittels eines weiteren Bedienelementes in dem Popup-Menü die Einstellung des Ausströmvolumens mit gleichzeitiger optischer Anzeige des numerischen Wertes des eingestellten Ausströmvolumens vorgenommen wird.

Bei diesem erfindungsgemäßen Verfahren werden zwei Bedienmodi bereitgestellt, nämlich ein erster Bedienmodus, bei welchem die Betätigungsfläche des Bedienelementes für die Zeitdauer eines ersten Zeitintervalls betätigt wird, sowie ein zweiter Bedienmodus, der dann aktiviert wird, wenn die Betätigungsfläche des Bedienelementes für die Zeitdauer eines gegenüber dem ersten Zeitintervalls kürzeren Zeitintervalls betätigt wird. Dieses zweite Zeitintervall entspricht einem kurzen Antippen der Betätigungsfläche des Bedienelementes. Mit diesem kurzen Antippen der Betätigungsfläche des Bedienelementes wird auf dem Display eines Bordmonitors ein Popup-Menü eingeblendet, über welches dann mittels eines weiteren Bedienelementes eine präzise Einstellung des Ausströmvolumens vorgenommen werden kann. Gleichzeitig wird mit diesem Popup-Menü der numerische Wert des aktuell eingestellten Ausströmvolumens exakt angezeigt.

Wird dagegen die Betätigungsfläche des Bedienelementes nicht nur kurz angetippt, sondern länger entsprechend der Zeitdauer des ersten Zeitintervalls betätigt, indem mit dem Finger eine bewegende Berührung mittels eines auf der Betätigungsfläche des Bedienelementes dargestellten Schiebereglers ausgeführt wird, wird der erste Bedienmodus aktiviert. Mit dem dargestellten virtuellen Schieberegler kann das Ausströmvolumen lediglich grob eingestellt werden, da der eingestellte Wert nur grafisch, also nichtnumerisch bspw. durch die Stellung des Schiebereglers angezeigt wird.

In einer bevorzugten Ausführungsform der Erfindung wird der Bordmonitor mit einem berührungsempfindlichen Bildschirm als weiteres Bedienelement ausgebildet. Alternativ ist es weiterbildungsgemäß auch möglich, dass ein Drehschalter als weiteres Bedienelement bereitgestellt wird.

Gemäß einer Weiterbildung des erfindungsgemäßen Verfahrens werden mit dem Popup-Menü weitere Ausströmer der Klimaanlage auf dem Bordmonitor eingeblendet, wobei das Ausströmvolumen der weiteren Ausströmer mittels des weiteren Bedienelementes einstellbar ist. Ferner kann das erfindungsgemäße Verfahren auch derart ausgeführt werden, dass das Ausströmvolumen für alle Ausströmer gleichzeitig mittels des weiteren Bedienelementes einstellbar ist.

Die weitere Aufgabe wird gelöst durch eine Bedienvorrichtung mit den Merkmalen des Patentanspruchs 6.

Eine solche Bedienvorrichtung für die Bedienung einer Klimaanlage eines Fahrzeugs mit wenigstens einem ein Bedienelement aufweisenden Ausströmer, wobei das Ausströmvolumen mittels einer berührungsempfindlichen Betätigungsfläche des Bedienelementes einstellbar ist, und mit einer Steuervorrichtung, die mit dem Bedienelement verbunden ist, zeichnet sich erfindungsgemäß dadurch aus, dass
- die Steuervorrichtung ausgebildet ist, bei einer Betätigung des Bedienelementes für ein definiertes erstes Zeitintervall eine Schiebereglerfunktion zur Einstellung des Ausströmvolumens zu realisieren,
- die Steuervorrichtung ausgebildet ist, bei einer Betätigung des Bedienelementes für ein definiertes gegenüber dem ersten Zeitintervall kürzeres zweites Zeitintervall auf einem Bordmonitor des Fahrzeugs ein Popup-Menü mit einer optischen Anzeige des numerischen Wertes des aktuellen Ausströmvolumens einzublenden, welches die Einstellung des Ausströmvolumens ermöglicht, und
- ein weiteres Bedienelement zur Einstellung des Ausströmvolumens in dem Popup-Menü vorgesehen ist.

Diese erfindungsgemäße Bedienvorrichtung weist auch die oben beschriebenen Vorteile des erfindungsgemäßen Verfahrens auf.

Bei dieser Bedienvorrichtung ist weiterbildungsgemäß vorgesehen, dass der Bordmonitor mit einem berührungsempfindlichen Bildschirm als weiteres Bedienelement ausgebildet ist und/oder ein Drehschalter das weitere Bedienelement vorgesehen ist.

Die Erfindung wird nachfolgend anhand eines Ausführungsbeispiels unter Bezugnahme auf die beigefügten Figuren ausführlich beschrieben. Es zeigen:
- Figur 1: eine schematische Darstellung eines in einer Instrumententafel eines Fahrzeugs angeordneten Luftausströmers mit einem Bedienelement,
- Figur 2: eine schematische Darstellung einer Instrumententafel mit Luftausströmern gemäß Figur 1 sowie einem Bordmonitor eines Fahrerinformationssystems, und
- Figur 3: ein Funktionsblockschaltbild zur Erläuterung des erfindungsgemäßen Verfahrens.

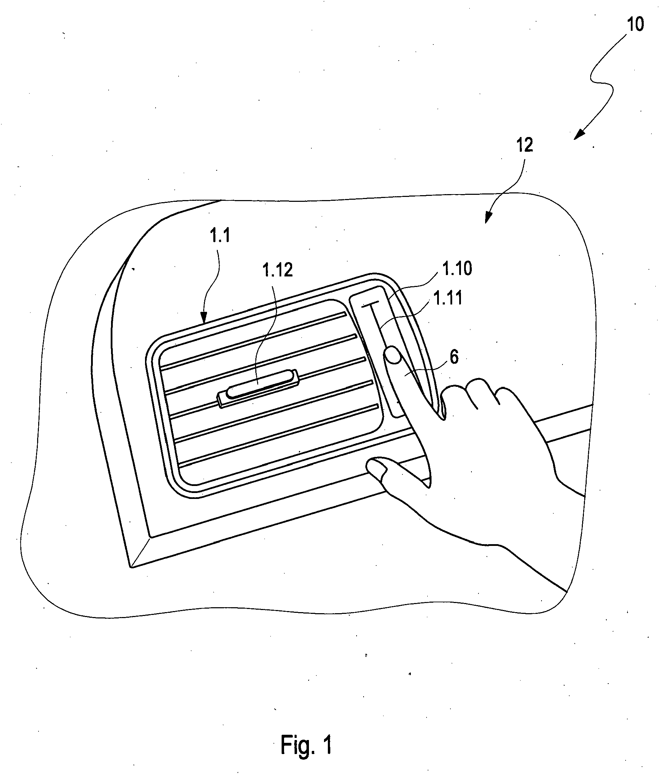

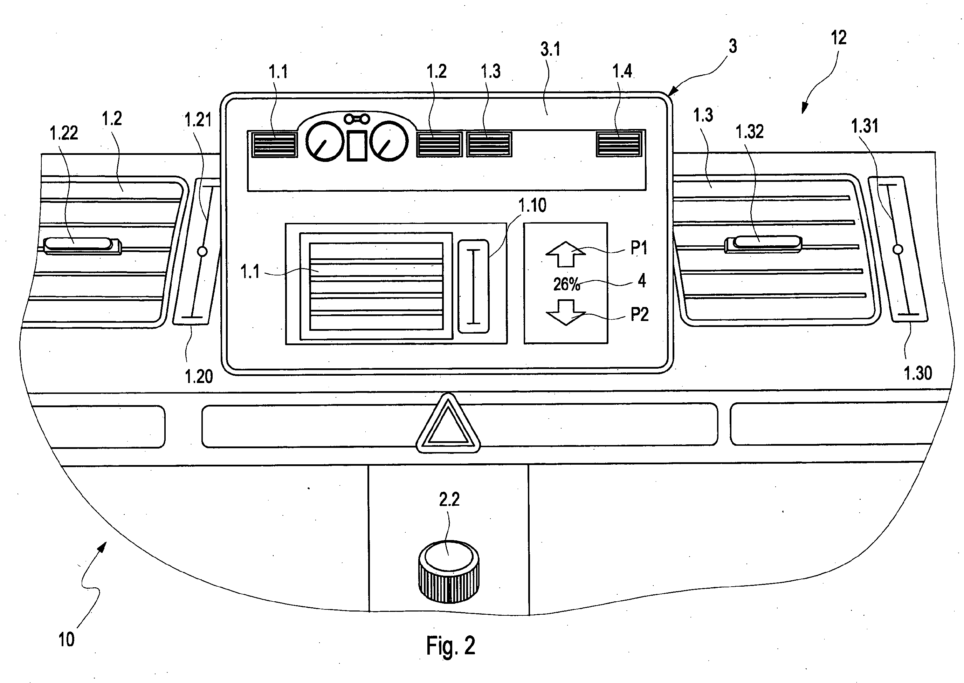

Die Figuren 1 und 2 zeigen jeweils einen Ausschnitt einer Instrumententafel 12 eines Fahrzeugs 10 mit einer Klimaanlage mit zugehörigen Luftausströmern. So zeigt Figur 1 einen Ausströmer 1.1 mit einem zugehörigen Bedienelement 1.10 und Figur 2 zwei weitere Ausströmer 1.2 und 1.3 mit jeweils einem zugehörigen Bedienelement 1.20 und 1.30. Zwischen diesen beiden Ausströmern befindet sich an der Instrumententafel 12 ein Bordmonitor 3 mit einem Display als Anzeigefeld eines Fahrerinforrpationssystems des Fahrzeugs 10, welches zusammen mit einem Drehschalter 2.2 eine Multifunktionsbedienvorrichtung, die auch als Multi Media Interface (MMI) bezeichnet wird, bildet. Die Funktion eines solchen MMI-Systems ist im Wesentlichen die Bedienung von Radio, CD/TV, Telefon und Navigationssystem sowie der Einstellung der Klimaanlage.

Die in den Figuren 1 und 2 dargestellten Ausströmer 1.1, 1.2 und 1.3 der Instrumententafel 12 sind mit Luftleitlamellen ausgebildet, die mittels eines mechanischen Bedienelementes 1.12, 1.22 bzw. 1.32 zur Einstellung der Ausströmrichtung verstellt werden können. Die Einstellung der Ausströmvolumen an den Ausströmern 1.1, 1.2 und 1.3 erfolgt jedoch nicht mittels mechanischen Bedienelementen, sondern mit berührungsempfindlichen Betätigungsflächen sowie mittels des Bordmonitors 3, wie dies nachfolgend erläutert wird.

Hierzu weisen diese Ausströmer 1.1, 1.2 und 1.3 jeweils ein Bedienelement 1.10, 1.20 und 1.30 auf, die mit einer berührungsempfindlichen Betätigungsfläche bzw. berührungsempfindlichen Bedienoberfläche 1.11, 1.21 bzw. 1.31 in der Art eines Touchpads realisiert sind. Die Ausströmer 1.1, 1.2 und 1.3 sind mit einer 4-eckigen Kontur ausgeführt, so dass die Bedienelemente 1.10, 1.20 und 1.30 mit einer rechteckigen Kontur zu einer Seite der Ausströmer 1.1, 1.2 und 1.3 direkt benachbart angeordnet sind.

Zur Einstellung des Ausströmvolumens an einem Ausströmer 1.1, 1.2 und 1.3 stehen zwei Bedienmodi zur Verfügung. Diese beiden Bedienmodi werden in Abhängigkeit der Betätigungsdauer des Bedienelementes 1.10, 1.20 bzw. 1.30 aktiviert, hängen also davon ab, wie lange der Finger 6 einer Bedienperson die berührungsempfindliche Betätigungsfläche 1.11, 1.21 bzw. 1.31 berührt.

So wird ein erster Bedienmodus bereitgestellt, indem die Betätigungsfläche 1.11, 1.21 bzw. 1.31 des Bedienelementes 1.10, 1.20 bzw. 1.30 für die Zeitdauer eines ersten Zeitintervalls betätigt wird. Wird dagegen die Betätigungsfläche 1.11, 1.21 bzw. 1.31 des Bedienelementes 1.10, 1.20 bzw. 1.30 für eine gegenüber dem ersten Zeitintervall kürzeren zweiten Zeitintervall betätigt, wird ein zweiter Bedienmodus aktiviert. Das zweite Zeitintervall entspricht einem kurzen Antippen mit einem Finger 6 einer Bedienperson, entspricht also einer Zeitdauer von bspw. 1 bis 2 s, während das erste Zeitintervall einem langen Antippen von mehr als 2 s, bspw. von 5 s entspricht.

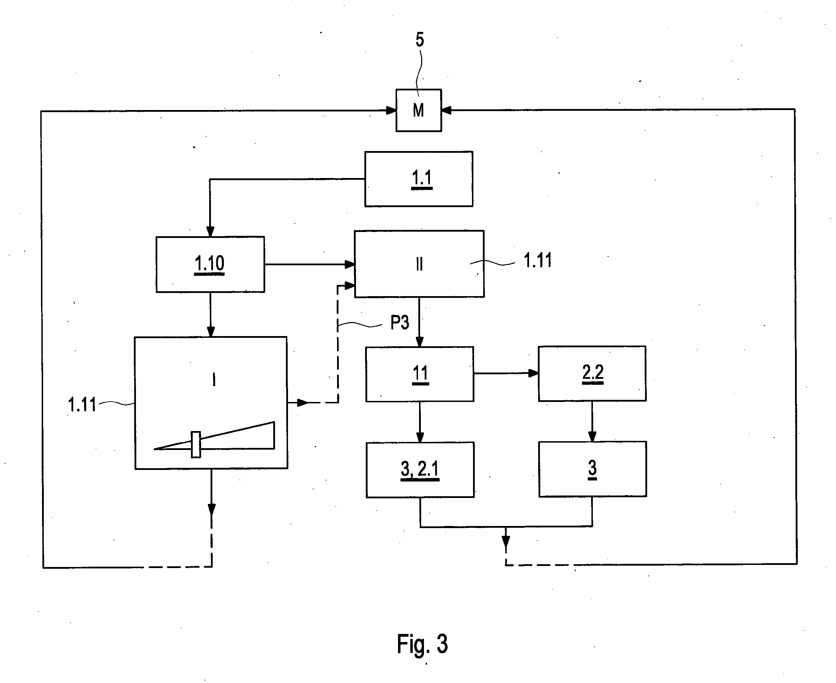

Diese beiden Bedienmodi werden nachfolgend anhand der Figuren 1 und 2 zusammen mit dem Funktionsblockschaltbild gemäß Figur 3 am Beispiel des Ausströmers 1.1 erläutert.

Die Figur 3 zeigt die Komponenten einer Bedienvorrichtung zur Realisierung der beiden Betriebsmodi und umfasst ein Steuergerät 11 des Fahrzeugs 10, welches mit der Betätigungsfläche 1.11 des Bedienelementes 1.10 des Ausströmers 1.1 verbunden ist, wobei mittels einer Sensortechnik die Berührung dieser Betätigungsfläche 1.11 durch den Finger einer Bedienperson, insbesondere deren Betätigungsdauer detektiert und ausgewertet wird. Ferner ist das Steuergerät 11 mit dem Drehschalter 2.2 sowie mit dem Bordmonitor 3 verbunden. Die von einer Bedienperson vorgenommene Einstellung des Ausströmvolumens an dem Ausströmer 1.1 im ersten Bedienmodus I oder im zweiten Bedienmodus II wird von dem Steuergerät 11 mittels eines Antriebs 5, bspw. eines Elektromotors umgesetzt, welches entsprechend der Einstellung im Bedienmodus I oder II den Luftstrom durch Öffnen oder Schließen des Ausströmers 1.1 steuert.

Die Betätigungsfläche 1.11 gemäß Figur 1 weist einen vertikal verlaufenden virtuellen Schieberegler mit einem Anfasspunkt (entsprechend einem Schieber eines mechanischen Schieberegiers) auf, der zwischen zwei Endpunkten durch Berühren der Betätigungsfläche 1.11 mittels eines Fingers 6 einer Bedienperson vertikal verschiebbar ist. Die Betätigung dieses Schiebereglers erfordert eine Betätigungsdauer, die zumindest dem ersten Zeitintervall entspricht und daher den ersten Bedienmodus I aktiviert.

Damit lässt sich in diesem Bedienmodus I das Ausströmvolumen am Ausströmer 1.1 zwischen einem Wert Null, bei welchem sich der Anfasspunkt am unteren Ende des Schiebereglers befindet, und einem maximalen Wert, bei welchem sich der Anfasspunkt am oberen Ende des Schiebereglers befindet, einstellen. Ein solcher virtueller Schieberegler eignet sich in der Regel zur intuitiven Einstellung des Wertes des Ausströmvolumens am Ausströmer 1.1, und stellt daher nur eine grobe Einstellung des gewünschten Wertes dar. Die Bedienperson kann den eingestellten Wert nichtnumerisch nur anhand der Stellung des Anfasspunktes zwischen den beiden Endpunkten ungenau erkennen. Eine genaue Einstellung des gewünschten Luftstromes an dem Ausströmer 1.1 ist damit nicht möglich. Selbst eine neben dem Schieberegler aufgetragene Skala oder ein in Figur 3 in einer Keilform dargestellter Statusanzeiger kann den exakten Wert nicht anzeigen.

Falls nach dem aktivierten Bedienmodus I keine weitere Betätigung erfolgt, wird entsprechend dem Funktionsblockschaltbild nach Figur 3 entsprechend der Stellung des Schiebereglers der Antrieb 5 angesteuert.

Entspricht dagegen die Betätigungsdauer der Betätigungsfläche 1.11 des Bedienelementes 1.10 dem zweiten Zeitintervall entsprechend einem kurzen Antippen durch den Finger 6 einer Bedienperson, wird der zweite Bedienmodus II aktiviert. Hierdurch wird von dem Steuergerät 11 auf dem Display des Bordmonitors 3 ein Popup-Menü 3.1 eingeblendet, welches dazu dient das Ausströmvolumen an dem Ausströmer 1.1 durch Anzeige des numerischen Wertes der aktuellen Einstellung exakt einzustellen.

Die Figur 2 zeigt beispielhaft ein solches Popup-Menü 3.1. Hiernach sind im oberen Bereich des Displays 3 alle vier in der Instrumententafel 12 eingebaute Ausströmer dargestellt. So sind nicht nur die zwischen einem Kombiinstrument angeordneten und für den Fahrer vorgesehenen Ausströmer 1.1 und 1.2 dargestellt, sondern auch Ausströmer 1.3 und 1.4 für den Beifahrer des Fahrzeugs 10. Wenn der Ausströmer 1.1 zur Aktivierung des Bedienmodus II nur kurz an getippt wurde, wird dieser Ausströmer 1.1 in dem Popup-Menü 3.1 grafisch gegenüber den anderen Ausströmern 1.2, 1.3 und 1.4 hervorgehoben dargestellt. Dieser für die Einstellung des Ausströmvolumens ausgewählte Ausströmer 1.1 ist im unteren Bereich des Displays 3 mit einer numerischen Anzeige 4 dargestellt, die den genauen Wert, nämlich 26 % des Ausströmvolumens am Ausströmer 1.1 anzeigt sowie einen nach oben zeigenden Up-Pfeil P1 und einen nach unten zeigenden Down-Pfeil P2. Über diese beiden Pfeile P1 und P2 kann der Wert des Ausströmvolumens exakt eingestellt werden. Hierzu stehen zwei Möglichkeiten zur Verfügung.

Ist das Display 3 als Touch-Display ausgeführt, so stellt der Bereich dieser numerischen Anzeige 4 ein weiteres Bedienelement 2.1 mit im Bereich der Pfeile P1 und P2 angeordneten berührungsempfindlichen Betätigungsfläche dar. Während der Berührung des Up-Pfeils P1 bzw. des Down-Pfeils P2 wird der Wert des Ausströmvolumens erhöht bzw. erniedrigt.

Die Einstellung des Ausströmvolumens am Ausströmer 1.1 mittels der Anzeige 4 kann auch durch eine Betätigung des Drehschalters 2.2 als weiteres Bedienelement erfolgen. Mittels dieses Drehschalters 2.2 wird ein grafisches Element auf dem Display 3 durch optisches Hervorheben ausgewählt und durch Drücken dieses Drehschalters 2.2 die entsprechende Funktion aktiviert. So kann mittels dieses Drehschalters 2.2 entweder der Up-Pfeil P1 oder der Down-Pfeil P2 ausgewählt und durch Drücken aktiviert und anschließendes Drehen der gewünschte Zahlenwert als Ausströmvolumen des Ausströmers 1.1 eingestellt werden.

Wenn gemäß Figur 3 entweder mittels des Touch-Displays 3 als weiteres Bedienelement 2.1 oder mittels des Drehschalters als weiteres Bedienelement 2.2 die Einstellung vorgenommen wurde, wird entsprechend dem eingestellten Wert der Antrieb 5 von dem Steuergerät 11 angesteuert.

Wenn eine Bedienperson zunächst den Bedienmodus I aktiviert hat, ist es natürlich auch möglich, dass anschließend entsprechend des Pfeils P3 (vgl. Figur 3) der Bedienmodus II durch die Bedienperson aktiviert wird.

Das Popup-Menü 3.1 kann auch so realisiert werden, dass nicht nur das Ausströmvolumen des durch Antippen des Bedienteil 1.10 ausgewählten Ausströmers 1.1 über dieses Popup-Menü 3.1 angestellt werden kann, sondern auch das Ausströmvolumen der im oberen Bereich des Displays 3 dargestellten weiteren Ausströmer 1.2, 1.3 und 1.4. Falls das Display 3 als Touch-Display ausgeführt ist und somit als weiteres Bedienelement 2.1 dient, können die weiteren Ausströmer 1.2, 1.3 und 1.4 durch Antippen jeweils ausgewählt und anschließend durch Antippen der Pfeile P1 und P2 das Ausströmvolumen eingestellt werden. Darüber hinaus kann die Einstellung des Ausströmvolumens eines der weiteren Ausströmer 1.2, 1.3 oder 1.4 auch mit dem Drehschalter 2.2 als weiteres Bedienelement durchgeführt werden, indem zunächst ein Ausströmer im oberen Bereich des Displays 3 ausgewählt und anschließend einer der Pfeile P1 oder P2 zur Einstellung des numerischen Wertes des Ausströmvolumens aktiviert wird.

Schließlich kann in dem Popup-Menü 3.1 zusätzlich eine Funktion bereitgestellt werden, mit welcher das Ausströmvolumen von allen Ausströmern 1.1, 1.2, 1.3 und 1.4 gleichzeitig auf einen Wert eingestellt werden kann, so dass an allen Ausströmern das gleiche Ausströmvölumen eines Luftstromes austritt. Für eine solche Funktion wird auf dem Display 3 ein grafisches Element bereitgestellt, welches entweder eine Betätigungsfläche als Touchpad zur Aktivierung der Funktion aufweist oder welches über den Drehschalter 2.2 ausgewählt und aktiviert werden kann.

### Bezugszeichen

- 1.1: Ausströmer einer Klimaanlage des Fahrzeugs 10
- 1.10: Bedienelement des Ausströmers 1.1
- 1.11: Betätigungsfläche des Bedienelementes 1.10
- 1.12: mechanisches Bedienelement
- 1.2: Ausströmer einer Klimaanlage des Fahrzeugs 10
- 1.20: Bedienelement des Ausströmers 1.2
- 1.21: Betätigungsfläche des Bedienelementes 1.20
- 1.22: mechanisches Bedienelement
- 1.3: Ausströmer einer Klimaanlage des Fahrzeugs 10
- 1.30: Bedienelement des Ausströmers 1.3
- 1.31: Betätigungsfläche des Bedienelementes 1.30
- 1.32: mechanisches Bedienelement

- 2.1: weiteres Bedienelement
- 2.2: weiteres Bedienelement, Drehschalter

- 3: Bordmonitor, Display
- 3.1: Popup-Menü

- 4: numerische Anzeige
- 5: Antrieb, Elektromotor
- 6: Finger einer Bedienperson

- 10: Fahrzeug
- 11: Steuervorrichtung, Steuergerät
- 12: Instrumententafel des Fahrzeugs 10

## Patentansprüche

1. Verfahren zum Bedienen einer Klimaanlage eines Fahrzeugs (10) mit wenigstens einem ein Bedienelement (1.10) aufweisenden Ausströmer (1.1), wobei das Ausströmvolumen mittels einer berührungsempfindlichen Betätigungsfläche (1.11) des Bedienelementes (1.10) eingestellt wird, wobei
- bei einer Betätigung des Bedienelementes (1.10) für ein definiertes erstes Zeitintervall eine Schiebereglerfunktion zur Einstellung des Ausströmvolumens aktiviert wird, **dadurch gekennzeichnet, dass**
- bei einer Betätigung des Bedienelementes (1.10) für ein definiertes zweites Zeitintervall, welches kürzer als das erste Zeitintervall ist, auf einem Bordmonitor (3) des Fahrzeugs (10) ein Popup-Menü (3.1) mit einer optischen Anzeige des numerischen Wertes des aktuellen Ausströmvolumens zur Einstellung des Ausströmvolumens eingeblendet wird, und
- mittels eines weiteren Bedienelementes (2.1, 2.2) in dem Popup-Menü (3.1) die Einstellung des Ausströmvolumens mit gleichzeitiger optischer Anzeige (4) des numerischen Wertes des eingestellten Ausströmvolumens vorgenommen wird.

2. Verfahren nach Anspruch 1,
**dadurch gekennzeichnet, dass** der Bordmonitor (3) mit einem berührungsempfindlichen Bildschirm als weiteres Bedienelement (2.1) ausgebildet wird.

3. Verfahren nach Anspruch 1 oder 2,
**dadurch gekennzeichnet, dass** als weiteres Bedienelement ein Drehschalter (2.2) bereitgestellt wird.

4. Verfahren nach einem der vorhergehenden Ansprüche,
**dadurch gekennzeichnet, dass** mit dem Popup-Menü (3.1) weitere Ausströmer (1.2, 13, 1.4) der Klimaanlage auf dem Bordmonitor (3) eingeblendet werden, wobei das Ausströmvolumen der weiteren Ausströmer (1.2, 1.3, 1.4) mittels des weiteren Bedienelementes (2.1, 2.2) einstellbar sind.

5. Verfahren nach einem der vorhergehenden Ansprüche,
**dadurch gekennzeichnet, dass** mit dem Popup-Menü (3.1) weitere Ausströmer (1.2, 1.3, 1.4) der Klimaanlage auf dem Bordmonitor (3) eingeblendet werden, wobei das Ausströmvolumen für alle Ausströmer (1.1, 1.2, 1.3, 1.4) gleichzeitig mittels des weiteren Bedienelementes (2.1, 2.2) einstellbar ist.

6. Bedienvorrichtung für die Bedienung einer Klimaanlage eines Fahrzeugs (10) mit wenigstens einem ein Bedienelement (1.10) aufweisenden Ausströmer (1.1), wobei das Ausströmvolumen mittels einer berührungsempfindlichen Betätigungsfläche (1.11) des Bedienelementes (1.10) einstellbar ist und mit einer Steuervorrichtung (11), die mit dem Bedienelement (1.10) verbunden ist, wobei
- die Steuervorrichtung (11) ausgebildet ist, bei einer Betätigung des Bedienelementes (1.10) für ein definiertes erstes Zeitintervall eine Schiebereglerfunktion zur Einstellung des Ausströmvolumens zu realisieren, **dadurch gekennzeichnet, dass**
- die Steuervorrichtung (11) ausgebildet ist, bei einer Betätigung des Bedienelementes (1.10) für ein definiertes gegenüber dem ersten Zeitintervall kürzeres zweites Zeitintervall auf einem Bordmonitor (3) des Fahrzeugs (10) ein Popup-Menü (3.1) mit einer optischen Anzeige (4) des numerischen Wertes des aktuellen Ausströmvolumens einzublenden, welches die Einstellung des Ausströmvolumens ermöglicht, und
- ein weiteres Bedienelement (2.1, 2.2) zur Einstellung des Ausströmvolumens in dem Popup-Menü (3.1) vorgesehen ist.

7. Bedienvorrichtung nach Anspruch 6,
**dadurch gekennzeichnet, dass** der Bordmonitor (3) mit einem berührungsempfindlichen Bildschirm als weiteres Bedienelement (2.1) ausgebildet ist.

8. Bedienvorrichtung nach Anspruch 6 oder 7,
**dadurch gekennzeichnet, dass** das weitere Bedienelement ein Drehschalter (2.2) ist.

## Claims

1. Method for operating an air-conditioning unit of a vehicle (10) with at least one vent (1.1) comprising an operating element (1.10) wherein the vent volume is set by means of a touch-sensitive actuation surface (1.11) of the operating element (1.10), wherein
- when the operating element (1.10) is actuated for a defined first time interval, a slide control function is activated for setting the vent volume, **characterised in that**
- when the operating element (1.10) is actuated for a defined second time interval, which is shorter than the first time interval, a pop-up menu (3.1) with an optical display of the numeric value of the current vent volume is shown on an on-board monitor (3) of the vehicle (10) to set the vent volume and
- by means of an additional operating element (2.1, 2.2) in the pop-up menu (3.1), the vent volume is set with simultaneous optical display (4) of the numeric value of the set vent volume.

2. Method according to claim 1,
**characterised in that** the on-board monitor (3) is designed with a touch-sensitive screen as the additional operating element (2.1).

3. Method according to claim 1 or 2,
**characterised in that** a rotary switch (2.2) is provided as an additional operating element.

4. Method according to any one of the preceding claims,
**characterised in that** additional vents (1.2, 1.3, 1.4) of the air-conditioning unit are shown on the on-board monitor (3) with the pop-up menu (3.1) wherein the vent volume of the additional vents (1.2, 1.3, 1.4) can be set by means of the additional operating elements (2.1,2.2).

5. Method according to any one of the preceding claims,
**characterised in that** additional vents (1.2,1.3, 1.4) of the air-conditioning unit are shown on the on-board monitor (3) with the pop-up menu (3.1) wherein the vent volume for all vents (1.1, 1.2, 1.3, 1.4) can be set simultaneously by means of the additional operating element (2.1, 2.2).

6. Operating device for operating an air-conditioning unit of a vehicle (10) with at least one vent (1.1) comprising an operating element (1.10) wherein the vent volume can be set by means of a touch-sensitive actuation surface (1.11) of the operating element (1.10) and with a control device (11) which is connected to the operating element (1.10), wherein
- the control device (11) is designed to carry out a slide control function to set the vent volume when the operating element (1.10) is actuated for a defined first time interval, **characterised in that**
- the control device (11) is designed to show a pop-up menu (3.1) with an optical display (4) of the numeric value of the current vent volume on an on-board monitor (3) of the vehicle (10) when the operating element (1.10) is actuated for a defined second time interval that is shorter with respect to the first time interval which enables the setting of the vent volume and
- an additional operating element (2.1, 2.2) is provided to set the vent volume in the pop-up menu (3.1).

7. Operating device according to claim 6,
**characterised in that** the on-board monitor (3) with a touch-sensitive screen is designed as an additional operating element (2.1).

8. Operating device according to claim 6 or 7,
**characterised in that** the additional operating element is a rotary switch (2.2).

## Revendications

1. Procédé de commande d'une installation de climatisation d'un véhicule (10) avec au moins une bouche d'aération (1.1) comportant un élément de commande (1.10),
dans lequel le volume d'air débité est réglé au moyen d'une surface d'actionnement tactile (1.11) de l'élément de commande (1.10)
et dans lequel, lors d'un actionnement de l'élément de commande (1.10) pendant un premier intervalle de temps défini, une fonction de réglage par curseur est activée en vue du réglage du volume d'air débité,
**caractérisé en ce que**
- lors d'un actionnement de l'élément de commande (1.10) pendant un deuxième intervalle de temps défini qui est plus court que le premier intervalle de temps, un menu contextuel (3.1) avec une indication visuelle de la valeur numérique du volume d'air débité actuel est inséré en vue du réglage du volume d'air débité sur un ordinateur de bord (3) du véhicule (10) et
- au moyen d'un autre élément de commande (2.1, 2.2) dans le menu contextuel (3.1), le réglage du volume d'air débité est effectué en même temps que l'indication visuelle (4) de la valeur numérique du volume d'air débité réglé.

2. Procédé selon la revendication 1, **caractérisé en ce que** l'ordinateur de bord (3) est conçu avec un écran tactile comme autre élément de commande (2.1).

3. Procédé selon la revendication 1 ou 2, **caractérisé en ce qu'**un sélecteur rotatif (2.2) est mis à disposition comme autre élément de commande.

4. Procédé selon l'une des revendications précédentes, **caractérisé en ce que**, avec le menu contextuel (3.1), d'autres bouches d'aération (1.2, 1.3, 1.4) de l'installation de climatisation sont insérées sur l'ordinateur de bord (3), le volume d'air débité des autres bouches d'aération (1.2, 1.3, 1.4) étant réglable au moyen de l'autre élément de commande (2.1, 2.2).

5. Procédé selon l'une des revendications précédentes, **caractérisé en ce que**, avec le menu contextuel (3.1), d'autres bouches d'aération (1.2, 1.3, 1.4) de l'installation de climatisation sont insérées sur l'ordinateur de bord (3), le volume d'air débité de toutes les bouches d'aération (1.1, 1.2, 1.3, 1.4) étant réglable simultanément au moyen de l'autre élément de commande (2.1, 2.2).

6. Dispositif de commande destiné à la commande d'une installation de climatisation d'un véhicule (10) avec au moins une bouche d'aération (1.1) comportant un élément de commande (1.10), le volume d'air débité étant réglable au moyen d'une surface d'actionnement tactile (1.11) de l'élément de commande (1.10), et avec un dispositif de commande (11) qui est relié à l'élément de commande (1.10),
dans lequel le dispositif de commande (11) est conçu pour, lors d'un actionnement de l'élément de commande (1.10) pendant un premier intervalle de temps défini, réaliser une fonction de réglage par curseur destinée au réglage du volume d'air débité,
**caractérisé en ce que**
- le dispositif de commande (11) est conçu pour, lors d'un actionnement de l'élément de commande (1.10) pendant un deuxième intervalle de temps défini qui est plus court que le premier intervalle de temps, insérer sur un ordinateur de bord (3) du véhicule (10) un menu contextuel (3.1) avec une indication visuelle (4) de la valeur numérique du volume d'air débité actuel, lequel menu contextuel permet le réglage du volume d'air débité, et
- un autre élément de commande (2.1, 2.2) est prévu pour régler le volume d'air débité dans le menu contextuel (3.1).

7. Dispositif de commande selon la revendication 6, **caractérisé en ce que** l'ordinateur de bord (3) est conçu avec un écran tactile comme autre élément de commande (2.1).

8. Dispositif de commande selon la revendication 6 ou 7, **caractérisé en ce que** l'autre élément de commande est un sélecteur rotatif (2.2).
